# EUROPEAN PATENT SPECIFICATION

(11) **EP 3 121 415 B1**
(45) Date of publication and mention of the grant of the patent: **04.07.2018**
(21) Application number: 16180460.4
(22) Date of filing: 20.07.2016
(51) Int. Cl.: F02C 7/052, F02C 7/055, F01D 25/32, B64D 33/02

(54) **AIRCRAFT ENGINE COMPRISING AN INTAKE PIPE PROVIDED WITH AN AIR FILTER WITH OPENABLE BOTTOM AND RELATIVE AIR FILTER**
FLUGZEUGTRIEBWERK MIT EINEM ANSAUGROHR MIT EINEM LUFTFILTER MIT ÖFFNENDEM BODEN UND ZUGEHÖRIGER LUFTFILTER
MOTEUR D'AÉRONEF COMPORTANT UN TUYAU D'ADMISSION POURVU D'UN FILTRE À AIR AVEC FOND OUVRABLE ET FILTRE À AIR CORRESPONDANT

(30) Priority: 20.07.2015 IT UB20152308
(43) Date of publication of application: 25.01.2017
(73) Proprietor: BMC S.R.L., 40059 Medicina (IT)
(72) Inventor: BERGAMI, Gaetano, 40059 MEDICINA (IT)
(74) Representative: Maccagnan, Matteo

(56) References cited:
- FR-A1- 2 603 946
- FR-A1- 2 906 569
- US-A1- 2013 092 798

## Description

### TECHNICAL FIELD

The invention relates to an engine of an aircraft, namely a machine built by mankind, which can stand and move in the air enabling the transportation of people or objects in the Earth's atmosphere, and to a relative air filter.

The invention finds advantageous application in a helicopter, to which explicit reference will be made in the description below without because of this loosing in generality.

### PRIOR ART

A modern helicopter is generally provided with at least one turbine engine, which operates a complex of blades, which allow the helicopter to lift and lower itself in a vertical direction, stand still while flying, move to the side, forward and backward. The turbine engine has, at the front, an air intake, through which the turbine engine sucks in the external air needed to operate (namely, the external air containing the oxygen needed for the combustion).

Generally speaking, the air intake can comprise a metal grid with relatively large meshes (in the range of one or two centimetres), which fulfils the function of preventing birds from flying into the air intake. More rarely, between the air intake and the turbine engine there is arranged an air filter having the function of filtering the air taken in, so as to hold back small-sized impurities (dust or the like), which, in the long term, can cause an early wear of the turbine engine. The use of the air filter is generally avoided, as the air filter causes load losses, which have a significant negative impact on the performances of the turbine engine, and has proven to be useful only close the ground; as a matter of fact, impurities tend to move downwards due to gravity and, therefore, they can be present in the air only in proximity to the ground, whereas at certain heights (i.e. beyond 50-70 metres from the ground) the air is completely free from impurities. As a consequence, the air filter is mounted only when the helicopter must operate (especially take off or land) in areas with a lot of dust, for example in desert areas.

However, the absence of the filter has proven to generally determine higher maintenance costs for the engine, due to the greater wear provoked by the presence of foreign bodies in the combustion chamber during take-off and landing (namely when the helicopter is close to the ground). As a matter of fact, even when the helicopter takes off and lands in heliports (with asphalt surfaces or the like), air currents generated by the rotation of the blades inevitably lift and spread around impurities (basically dust and small debris), which are always present in the external environment.

Patent application US2013092798A1 describes an aircraft engine having a tubular housing provided with an air intake opening, through which the engine takes in the external air needed to operate; inside the tubular housing there is arranged a cylindrical air filter, which is provided, at the front, with at least one deflecting element with a rounded shape, which is axially movable so as to move between a closed position, in which the deflecting element is in contact with the cylindrical air filter, and an open position, in which the deflecting element is moved away from the cylindrical air filter, so as to define a bypass opening, through which the air can get in without having to flow through the filtering material. However, the aircraft described in patent application US2013092798A1 is affected by some drawbacks, as the movement of the deflecting element requires a complicated mechanism, which is large and heavy, and the bypass opening that can be generated by the axial movement of the deflecting element has a relatively small air passageway section. Patent application FR2603946 describes an inlet filter for a turbofan engine.

### DESCRIPTION OF THE INVENTION

The object of the invention is to provide an aircraft engine and a relative air filter, which allow the aircraft to safely operate even in areas with a lot of dust, without causing, at the same time, a reduction of the performances.

According to the invention, there are provided an aircraft engine and a relative air filter according to the appended claims.

### BRIEF DESCRIPTION OF THE DRAWINGS

The invention will now be described with reference to the accompanying drawings, which show a non-limiting embodiment thereof, wherein:
- figures 1, 2 and 3 are schematic views, namely a side, a front and a top view, respectively, of a helicopter provided with a pair of twin turbine engines according to the invention;
- figure 4 is a schematic view, with a longitudinal section, of part of a turbine engine of the helicopter of figure 1, said turbine engine comprising an intake pipe provided with an air filter;
- figure 5 is a schematic view, with a longitudinal section, of a variant of the air filter of figure 4; and
- figure 6 is a schematic view, with a longitudinal section, of another variant of the air filter of figure 4.

### PREFERRED EMBODIMENTS OF THE INVENTION

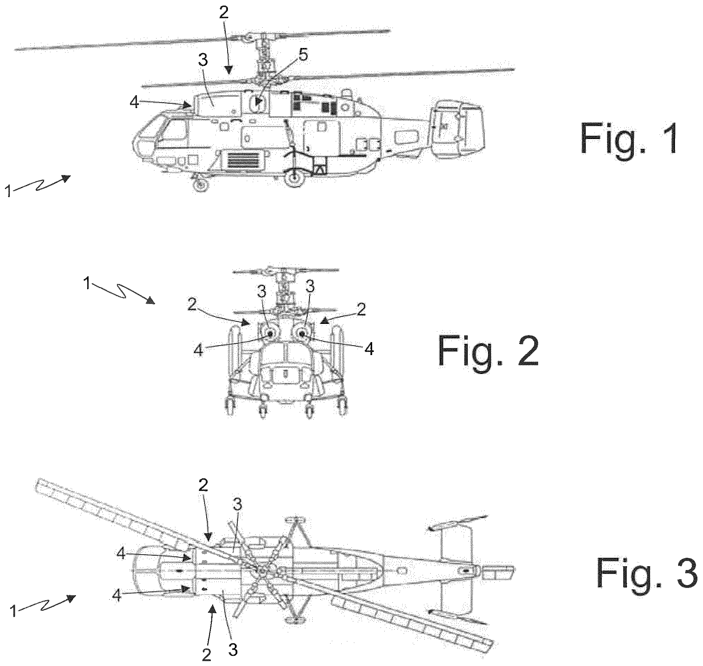

In figures 1, 2 and 3, number 1 indicates, as a whole, a helicopter comprising two twin turbine engines 2, which operate a complex of blades, which allow the helicopter to lift and lower itself in a vertical direction, stand still while flying, move to the side, forward and backward.

Each turbine engine 2 comprises a tubular housing 3 having, at the front, an air intake opening 4 (through which the turbine engine 2 takes in the external air needed to operate, i.e. the external air containing the oxygen needed for the combustion) and, at the back, an air outlet opening 5 (through which the turbine engine 2 expels the exhaust gases produced by the combustion). In the area of the intake opening 4 there can be arranged a metal grid with relatively large meshes (in the range of one or two centimetres), which fulfils the function of preventing birds from flying into the air intake.

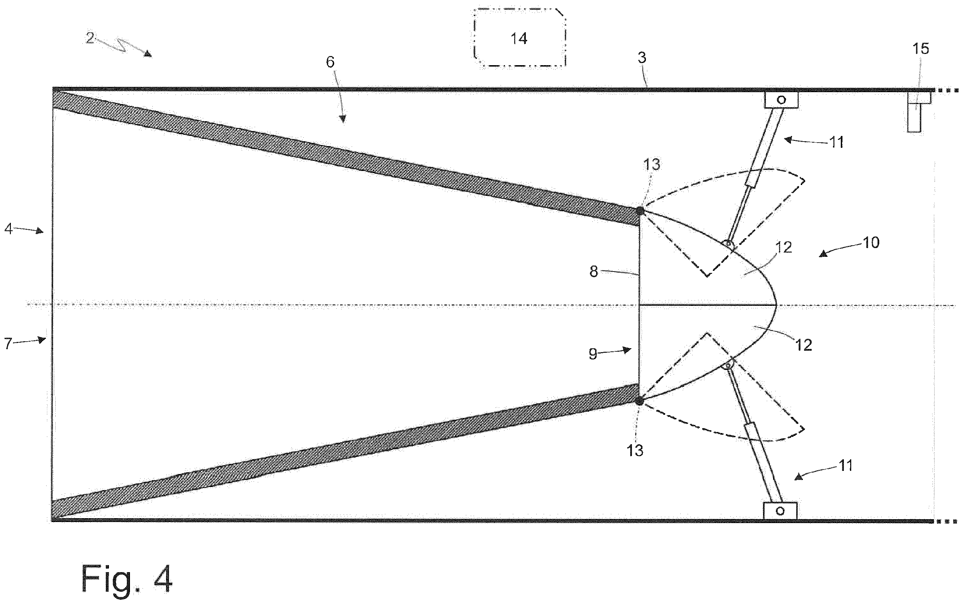

According to figure 4, the tubular housing 3 houses an air filter 6, which has a tubular shape (in which the filtering material is arranged in the area of the lateral wall) and comprises an intake opening 7, which is arranged in the area of the intake opening 4 of the tubular housing 3, and a bottom wall 8, which is arranged on the inside of the tubular housing 3 in a position opposite the intake opening 7. The bottom wall 8 of the air filter 6 has an outlet opening 9, which is coupled to a utter device 10, which is mounted so as to move between a closed position (shown with a continuous line in figure 4), in which it closes the outlet opening 9, and an open position (shown with a broken line in figure 4), in which it sets the passage through the outlet opening 9 free. The movement of the shutter device 10 between the open position and the closed position is controlled by an actuator 11 (for example an electric motor or a pneumatic or hydraulic cylinder).

In the embodiment shown in figure 4, the shutter device 10 comprises two walls 12, each hinged so as to rotate around a rotation axis (13), which is arranged crosswise (namely, transversely to the central axis of the air filter 6 and of the tubular housing 3) in the area of an edge of the outlet opening 9. In the embodiment shown in figure 4, each wall 12 has the shape of a half-shell, so that the two walls 12, in the closed position, taken on - together - the shape of an ogive. According to a different embodiment, which is not shown herein and is perfectly equivalent, the walls 12 are flat. It should be pointed out that the shutter device 10 can be shaped differently (e.g. it can comprise one single wall provided with a rotary movement, one single wall provided with a translation movement, a pair of walls provided with a translation movement, one or more walls provided with a roto-translation movement...); the constant feature is the presence of a movable shutter device 10, which is coupled to the outlet opening 9 of the bottom wall 8 of the air filter 6 so as to open or close the outlet opening 9 itself.

The air filter 6 comprises a support frame with a cylindrical shape (made of aluminium, a plastic material or a composite material), which supports different panels of filtering material (for example made of fabric or nonwoven fabric of cotton or other fibres, enclosed between two layers of a thin metal net, which give shape and resistance to the filtering material).

The intake opening 7 of the air filter 6 completely engages the intake opening 4 of the tubular housing 3, namely the intake opening 7 of the air filter 6 has the same size as the intake opening 4 of the tubular housing 3 and is arranged directly in contact with the intake opening 4 of the tubular housing 3; in this way, all the air flowing through the intake opening 4 of the tubular housing 3 also flows through the intake opening 7 of the air filter 6 and, therefore, gets into the air filter 6 itself. When the shutter device 10 is in the closed position (shown with a continuous line in figure 4), the air present inside the air filter can flow out of the air filter 6 and, hence, get to the turbine (not shown and arranged downstream of the air filter 6 in the tubular housing 3) only by flowing through the lateral filtering wall of the air filter 6. On the other hand, when the shutter device 10 is in the open position (shown with a broken line in figure 4), the air present inside the air filter 6 can flow out of the air filter 6 also through the outlet opening 9 of the bottom wall 8 (which, as it is not provided with filtering material, does not pose an obstacle to the air flowing through); obviously, when the shutter device 10 is in the open position (shown with a broken line in figure 4), almost all the air flowing into the air filter 6 flows through the outlet opening 9 of the bottom wall 8 rather than through the lateral filtering wall of the air filter, since flowing through the outlet opening 9 of the bottom wall 8 causes smaller losses of load.

When the air filter 10 is in the closed position (shown with a continuous line in figure 4), the air taken in necessarily flows through the lateral filtering wall of the air filter 6; therefore, possible impurities present in the air are held back by the air filter 6, but, on the other hand, the passage through the lateral filtering wall of the air filter 6 determines, in the air taken in, a loss of load, which jeopardizes the performances of the turbine engine 2. When the shutter device 10 is in the open position (shown with a broken line in figure 4), instead, the air taken in flows through the outlet opening 9 of the bottom wall 8 of the air filter 6 and, therefore, possible impurities present in the air are not held back by the air filter 6; hence, there is no loss of load in the air taken in, but, on the other hand, possible impurities present in the air are not held back by the air filter 6.

According to figure 4, there is provided an electronic control unit 14, which controls the operation of the air filter 6 and, among other things, controls the actuator 11 so as to have it move the shutter device 10 between the closed position (shown with a continuous line in figure 4) and the open position (shown with a broken line in figure 4). In particular, when the helicopter 1 is close to the ground (during take-off or landing or when it stops at a low altitude), the air taken in can (likely) contain impurities and, therefore, the shutter device 10 is moved to and kept in the closed position by the electronic control unit 14, so as to filter the air taken in; on the other hand, when the helicopter 1 flies high (i.e. far from the ground, for example at an altitude of some dozens of metres), the air taken in very likely contains impurities and, therefore, the shutter device 10 is moved to and kept in the open position by the electronic control unit 14, so as to avoid (uselessly) jeopardizing the performances of the turbine engine 2.

Furthermore, the electronic control unit 14 is connected to a pressure sensor 15, which is arranged in the tubular housing 3 downstream of the air filter 6 and measures the pressure of the air taken in after it has flown through the air filter 6; when the pressure of the air take in, measured by the pressure sensor 15, is below a threshold value, the shutter device 10 is moved to and kept in the open position (shown with a broken line in figure 4) by the electronic control unit 14, regardless of the proximity of the helicopter 1 to the ground. In other words, the pressure of the air taken in, measured by the pressure sensor 15, indicates the clogging of the air filter 6, since the more the air filter 6 is clogged, the lower the pressure of the air taken in, measured by the pressure sensor 15, is; therefore, when the air filter 6 is too clogged, namely when the pressure of the air taken in, measured by the pressure sensor 15, is below a threshold value, the shutter device 10 is moved to and kept in the open position (shown with a broken line in figure 4) by the electronic control unit 14, so as to avoid excessively jeopardizing the performances of the turbine engine 2.

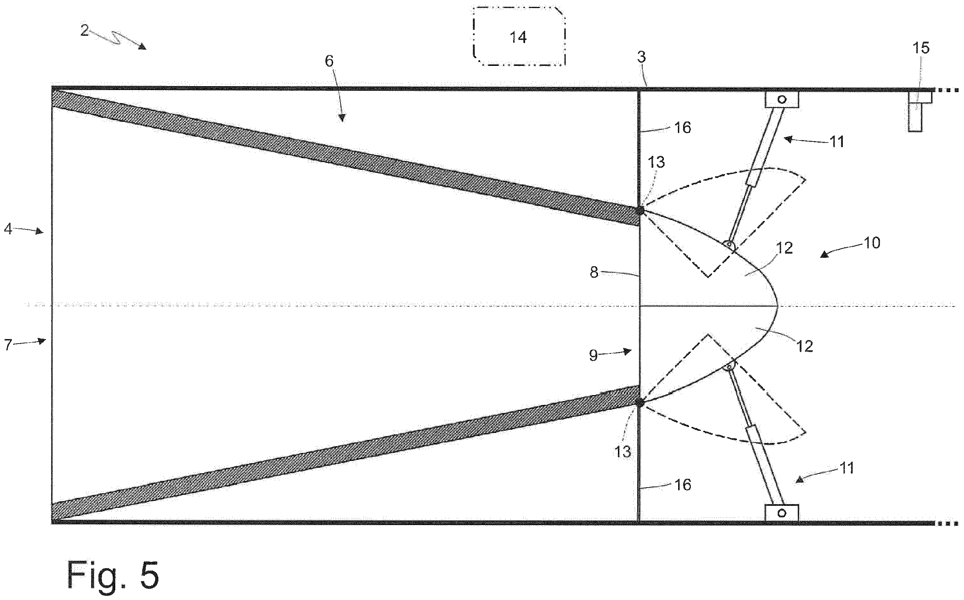

In the embodiment shown in figure 5, there are provided support rods 16 (e.g. three support rods 16 arranged at 120° relative to one another), which, at an outer end, are rigidly connected to the wall of the tubular housing 3 and, at an inner end, are rigidly connected to the bottom wall 8 of the air filter 6. The support rods 16 are relatively thin (so as not to excessively interfere with the flow of air inside the tubular housing 3 downstream of the air filter 6) and fulfil the function of significantly reducing the vibrations of the bottom wall 8 of the air filter 6; as a matter of fact, without the support rods 16, the air filter 6 is mounted in a projecting manner only in the area of the intake opening 7 and, therefore, the bottom wall 8 of the air filter 6 is relatively free to vibrate due to the mechanical stresses caused both by the flow of air and by the vibrations of the helicopter 1 (and excessive vibration of the bottom wall 8 of the air filter 6 can determine, in the long term, fatigue failures).

In the embodiments shown in figures 4 and 5, the air filter has the shape of a truncated cone in which the larger wall is arranged in the area of the intake opening 7 and the smaller wall is arranged in area of the bottom wall 8 (namely, it is arranged in the area of the outlet opening 9). As already mentioned above, the filtering material is arranged in the area of the lateral wall. By so doing, the intake opening 7 of the air filter 6 (hence, the intake opening 4 of the tubular housing 3, which is directly coupled to the intake opening 7 of the air filter 6) can have a larger size.

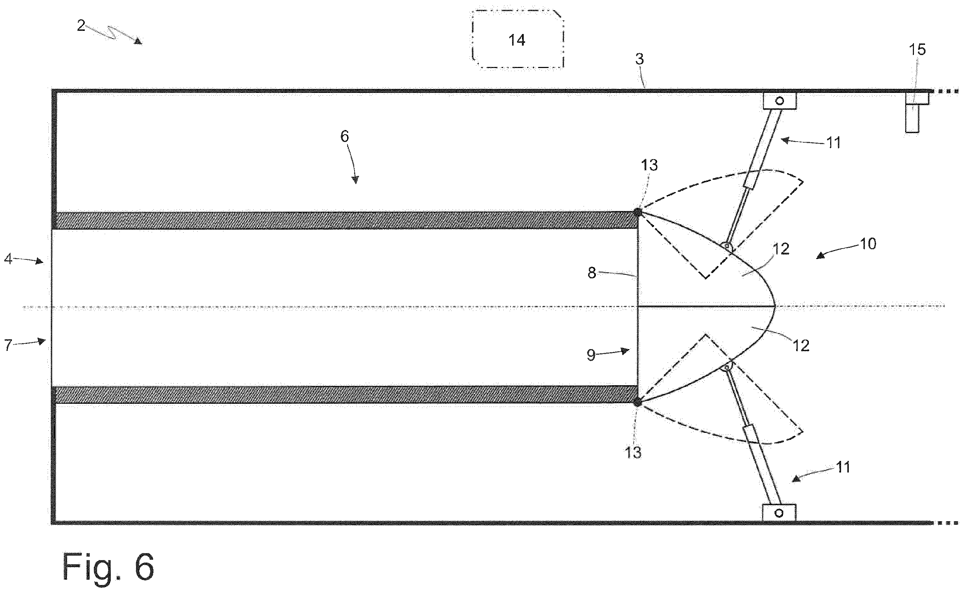

In the embodiment shown in figure 6, the air filter 6 has a cylindrical shape. This embodiment makes the lateral filtering wall easier to be manufactured, but, on the other hand, it jeopardized (i.e. reduces) the size of the intake opening 7 of the air filter 6 (i.e. the size of the intake opening 4 of the tubular housing 3, which is directly coupled to the intake opening 7 of the air filter 6)

The embodiment shown by mere way of example in the accompanying drawings relates to a helicopter 1, but the invention can find advantageous application in any type of aircraft, hence also an airplane.

The engine 2 described above has numerous advantages.

First of all, the engine 2 described above allows the aircraft 1 to safely operate in areas with a lot of dust (hence, in areas where the air close to the ground is rich in impurities raised both by natural wind and by air currents generated by the movement of the aircraft 1) thanks to the presence of the air filter 6, which, when needed, is operated (by moving the shutter device 10 to the closed position), so as to preventively filter the air taken in by the engine 2.

Furthermore, the engine 2 described above can operate, almost for the entire flight, without having its performances jeopardized, because, when the aircraft 1 flies high (i.e. relatively far from the ground), the air filter 6 is bypassed (by moving the shutter device 10 to the open position).

Finally, the engine 2 described above is easy and cheap to be manufactured, as the movements of the shutter device 10 can be obtained in a simple manner and with components that are available in the market.

## Claims

1. An engine (2) of an aircraft (1); the engine (2) comprises:
a tubular housing (3) having an air intake opening (4), through which the engine (2) takes in the external air needed to operate; and
at least one air filter (6), which is arranged in the tubular housing (3), has a tubular shape and comprises an intake opening (7), which is arranged in correspondence to the intake opening (4) of the tubular housing (3), and a bottom wall (8), which is arranged on the inside of the tubular housing (3);
the engine (2) is **characterized in that:**
the bottom wall (8) of the air filter (6) has an outlet opening (9);
there is provided at least one shutter device (10), which is coupled to the outlet opening (9) of the bottom wall (8) of the air filter (6) and is movable between a closed position, in which it closes the outlet opening (9), and an open position, in which it sets the passage through the outlet opening (9) free; and
there is provided an actuator (11), which moves the shutter device (10) between the closed position and the open position.

2. An engine (2) according to claim 1, wherein the lateral wall of the air filter (6) is made of filtering material.

3. An engine (2) according to claim 1 or 2, wherein the air filter (6) has the shape of a truncated cone having the larger base in correspondence to the intake opening (7) and the smaller base in correspondence to the outlet opening (9).

4. An engine (2) according to claim 1, 2 or 3, wherein there is provided at least one support rod (16), which, at an outer end, is rigidly connected to a lateral wall of the tubular housing (3) and, at an inner end, is rigidly connected to the bottom wall (8) of the air filter (6).

5. An engine (2) according to any of the claims from 1 to 4, wherein the shutter device (10) comprises two walls (12), each hinged so as to rotate around a rotation axis (13), which is arranged crosswise in correspondence to an edge of the outlet opening (9).

6. An engine (2) according to claim 5, wherein each wall (12) of the shutter device (10) has the shape of a half-shell, so that the two walls (12) of the shutter device (10), in the closed position, taken on - together - the shape of an ogive.

7. An engine (2) according to any of the claims from 1 to 6, wherein the intake opening (7) of the air filter (6) completely engages the intake opening (4) of the tubular housing (3).

## Patentansprüche

1. Triebwerk (2) eines Luftfahrzeugs (1); wobei das Triebwerk (2) Folgendes umfasst:
ein rohrförmiges Gehäuse (3), das eine Luftansaugöffnung (4) aufweist, durch die das Triebwerk (2) die Außenluft ansaugt, die es zum Arbeiten benötigt; und
mindestens einen Luftfilter (6), der in dem rohrförmigen Gehäuse (3) angeordnet ist, eine rohrförmige Form aufweist und eine Ansaugöffnung (7) umfasst, die entsprechend der Ansaugöffnung (4) des rohrförmigen Gehäuses (3) angeordnet ist, und eine Bodenwand (8), die an der Innenseite des rohrförmigen Gehäuses (3) angeordnet ist;
wobei das Triebwerk (2) **dadurch gekennzeichnet ist, dass** die Bodenwand (8) des Luftfilters (6) eine Auslassöffnung (9) aufweist;
mindestens eine Verschlussvorrichtung (10) vorgesehen ist, die mit der Auslassöffnung (9) der Bodenwand (8) des Luftfilters (6) gekoppelt ist und zwischen einer geschlossenen Position, in der sie die Auslassöffnung (9) verschließt, und einer geöffneten Position, in der sie den Durchgang durch die Auslassöffnung (9) freigibt, beweglich ist; und
ein Aktuator (11) vorgesehen ist, der die Verschlussvorrichtung (10) zwischen der geschlossenen Position und der geöffneten Position bewegt.

2. Triebwerk (2) nach Anspruch 1, wobei die Seitenwand des Luftfilters (6) aus Filtermaterial gefertigt ist.

3. Triebwerk (2) nach Anspruch 1 oder 2, wobei der Luftfilter (6) die Form eines Kegelstumpfs aufweist, dessen größere Grundfläche der Ansaugöffnung (7) entspricht und dessen kleinere Grundfläche der Auslassöffnung (9) entspricht.

4. Triebwerk (2) nach Anspruch 1, 2 oder 3, wobei mindestens eine Stützstange (16) vorgesehen ist, die an einem äußeren Ende starr mit einer Seitenwand des rohrförmigen Gehäuses (3) verbunden ist und an einem inneren Ende starr mit der Bodenwand (8) des Luftfilters (6) verbunden ist.

5. Triebwerk (2) nach einem der Ansprüche 1 bis 4, wobei die Verschlussvorrichtung (10) zwei Wände (12) umfasst, von denen jede drehbar gelagert ist, um sich um eine Drehachse (13) zu drehen, die quer im Hinblick auf eine Kante der Auslassöffnung (9) angeordnet ist.

6. Triebwerk (2) nach Anspruch 5, wobei jede Wand (12) der Verschlussvorrichtung (10) die Form einer Halbschale aufweist, sodass die zwei Wände (12) der Verschlussvorrichtung (10) in der geschlossenen Position zusammen die Form eines Spitzbogens annehmen.

7. Triebwerk (2) nach einem der Ansprüche 1 bis 6, wobei die Ansaugöffnung (7) des Luftfilters (6) vollständig in die Ansaugöffnung (4) des rohrförmigen Gehäuses (3) eingreift.

## Revendications

1. Moteur (2) d'aéronef (1) ; le moteur (2) comprenant :
un boîtier tubulaire (3) ayant une ouverture d'admission d'air (4) à travers laquelle le moteur (2) prélève l'air extérieur nécessaire pour fonctionner ; et
au moins un filtre à air (6) qui est agencé dans le boîtier tubulaire (3), a une forme tubulaire et comprend une ouverture d'admission (7), qui est agencée en coïncidant avec l'ouverture d'admission (4) du boîtier tubulaire (3), et une paroi inférieure (8), qui est agencée à l'intérieur du boîtier tubulaire (3) ;
le moteur (2) est **caractérisé en ce que** :
la paroi inférieure (8) du filtre à air (6) a une ouverture de sortie (9) ;
on prévoit au moins un dispositif d'obturation (10) qui est couplé à l'ouverture de sortie (9) de la paroi inférieure (8) du filtre à air (6) et est mobile entre une position fermée dans laquelle il ferme l'ouverture de sortie (9) et une position ouverte dans laquelle il laisse le passage à travers l'ouverture de sortie (9) libre ; et
on prévoit un actionneur (11) qui déplace le dispositif d'obturation (10) entre la position fermée et la position ouverte.

2. Moteur (2) selon la revendication 1, dans lequel la paroi latérale du filtre à air (6) est réalisée avec un matériau filtrant.

3. Moteur (2) selon la revendication 1 ou 2, dans lequel le filtre à air (6) a une forme tronconique ayant une base plus grande à l'ouverture d'admission (7) et une plus petite base à l'ouverture de sortie (9) .

4. Moteur (2) selon la revendication 1, 2 ou 3, dans lequel on prévoit au moins une tige de support (16) qui, à une extrémité externe, est raccordée rigidement à une paroi latérale du boîtier tubulaire (3) et, à une extrémité interne, est rigidement raccordée à la paroi inférieure (8) du filtre à air (6) .

5. Moteur (2) selon l'une quelconque des revendications 1 à 4, dans lequel le dispositif d'obturation (10) comprend deux parois (12), chacune articulée pour tourner autour d'un axe de rotation (13) qui est agencé dans le sens transversal à l'endroit d'un bord de l'ouverture de sortie (9).

6. Moteur (2) selon la revendication 5, dans lequel chaque paroi (12) du dispositif d'obturation (10) a la forme d'une demi-coque, de sorte que les deux parois (12) du dispositif d'obturation (10), dans la position fermée, adoptent - ensemble - la forme d'une ogive.

7. Moteur (2) selon l'une quelconque des revendications 1 à 6, dans lequel l'ouverture d'admission (7) du filtre à air (6) occupe complètement l'ouverture d'admission (4) du boîtier tubulaire (3).
